# EUROPÄISCHE PATENTSCHRIFT

(11) **EP 0 762 099 B1**
(45) Veröffentlichungstag und Bekanntmachung des Hinweises auf die Patenterteilung: **31.07.2002**
(21) Anmeldenummer: 96108352.4
(22) Anmeldetag: 24.05.1996
(51) Int. Cl.: G01M 1/32, G01M 1/38, G01M 1/02, G01B 21/26

(54) **Vorrichtung zum Erfassen einer bestimmten Position an einem Kraftfahrzeugrad**
Device for recording a determined position of a vehicle wheel
Dispositif pour enregistrer une position déterminée d'une roue de véhicule

(30) Priorität: 06.09.1995 DE 19532916
(43) Veröffentlichungstag der Anmeldung: 12.03.1997
(73) Patentinhaber: Snap-On Deutschland Holding GmbH, 40822 Mettmann (DE)
(72) Erfinder: Humber, Kurt, 64347 Griesheim (DE); Rothamel, Karl, 64342 Seeheim-Jugenheim (DE); Rühl, Klaus, 63762 Grossostheim (DE)
(74) Vertreter: Nöth, Heinz, Dipl.-Phys.

(56) Entgegenhaltungen:
- WO-A-90/03561
- DE-A- 2 639 384
- DE-A- 3 104 797
- DE-A- 4 122 844
- DE-A- 4 336 508
- US-A- 5 355 729
- US-A- 5 377 542

## Beschreibung

Die Erfindung betrifft eine Vorrichtung nach dem Oberbegriff des Patentanspruchs 1.

Eine Vorrichtung der eingangs genannten Art geht aus der DE 41 22 844 A1 hervor. Mit dieser Vorrichtung können Geometriedaten eines Kraftfahrzeugrades, welches auf eine Messwelle einer Auswuchtmaschine aufgespannt ist, erfasst werden. Außerdem kann das als Tastkopf und/oder Halter für ein am Kraftfahrzeugrad zu befestigendes Ausgleichsgewicht dienende mechanische Tastelement, das als Taststange ausgebildet ist, zum Auffinden der durch die Auswertelektronik bestimmten Ausgleichsposition, in der das Ausgleichsgewicht zu befestigen ist, verwendet werden. Die Taststange ist in einem Bezugspunkt schwenkbar an der Vorrichtung angeordnet, wobei ein Winkelaufnehmer den Schwenkwinkel der Taststange erfasst. Ferner wird die Auszugslänge der Taststange ausgehend vom Bezugspunkt bestimmt. Die dem Schwenkwinkel und der Auszugslänge entsprechenden Wandlersignale werden für die Bestimmung der Ausgleichsgewichte in die Maschinenelektronik eingegeben.

Weiterhin ist eine Vorrichtung bei einer Ausführungsform in der DE 42 29 865 C2 bekannt. Mit dieser Vorrichtung können Geometriedaten eines Kraftfahrzeugrades, das auf eine Meßwelle einer Auswuchtmaschine aufgespannt ist, erfaßt werden. Außerdem kann das als Tastkopf und/oder Halter für ein am Kraftfahrzeugrad zu befestigendes Ausgleichsgewicht dienende mechanische Tastelement zum Auffinden der durch die Auswerteelektronik bestimmten Ausgleichsposition, in welcher das Ausgelichsgewicht zu befestigen ist, verwendet werden.

Aufgabe der Erfindung ist es, mit einfachen Mitteln für die Erzeugung der Wandlersignale die jeweilige Position des Tastelements zu erfassen.

Diese Aufgabe wird erfindungsgemäß durch die kennzeichnenden Merkmale des Patentanspruches 1 gelöst.

Der wenigstens eine Bezugspunkt bildet an der Maschine einen Festpunkt und besitzt gegenüber den Meßwertaufnehmem, welche die Fliehkräfte bei der Unwuchtmessung erfassen, bestimmte Abstände. Hierdurch wird gewährleistet, daß die mit dem Tastelement am Kraftfahrzeugrad angetastete Position in Bezug gesetzt ist zu den Positionen der Meßwandler, welche die Fliehkräfte bei der Unwuchtmessung aufnehmen.

Durch den Abstand des Tastelements vom Bezugspunkt und dem Winkel, den das Tast-element bezüglich einem zur Radachse parallelen Winkelschenkel einschlisst, der durch den Bezugspunkt geht, läßt sich eine genaue Bestimmung der jeweiligen Lage des Tastelements erreichen.

Der wenigsten eine Bezugspunkt kann als Umlenkstelle oder Öse ausgebildet sein für das in seiner Länge verstellbare bombierte Band das von einer Spule abgewickelt wird. Der Speicher bzw. die Spule für das bombierte Band kann auch an der Stelle des Bezugspunkts vorgesehen sein. Die jeweilige abgezogene Länge läßt sich vom Potentiometer bzw. vom Wandlerelement erfassen und in ein elektrisches Signal umsetzen.

Die Spule, auf welcher das bombierte Meßband aufgewickelt ist, kann in bevorzugter Weise mit ihrer Achse im Bezugspunkt angeordnet sein. Es ist jedoch auch möglich, diese Spule außerhalb des Bezugspunktes vorzusehen. Wenn die Spule mit ihrer Achse im Bezugspunkt angeordnet ist, kann ein Spulengehäuse um die Spulenachse, welche bevorzugt senkrecht zur Radachse verläuft, in

Abhängigkeit von der Auszugsrichtung des bombierten Bandes schwenkbar sein. Auf diese Weise läßt sich der Auszugswinkel, insbesondere in Bezug auf die Radachse sowie die Auszugslänge des Maßbandes, vom Bezugspunkt bis zur angetasteten Position am Kraftfahrzeugrad bestimmen. Aus dem Winkel und der Auszugslänge läßt sich dann die genaue Position der angetasteten Stelle errechnen.

Anhand der Figuren wird an Ausführungsbeispielen die Erfindung noch näher erläutert. Es zeigt:
- Fig. 1:: ein Ausführungsbeispiel in Seitenansicht;
- Fig. 2:: das Ausführungsbeispiel der Fig. 1 in Draufsicht.

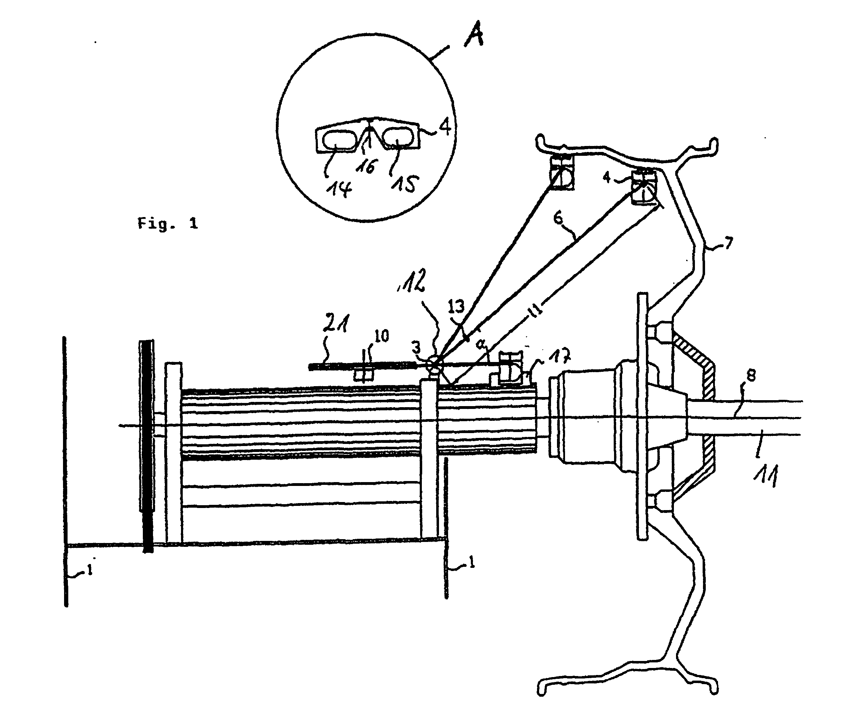

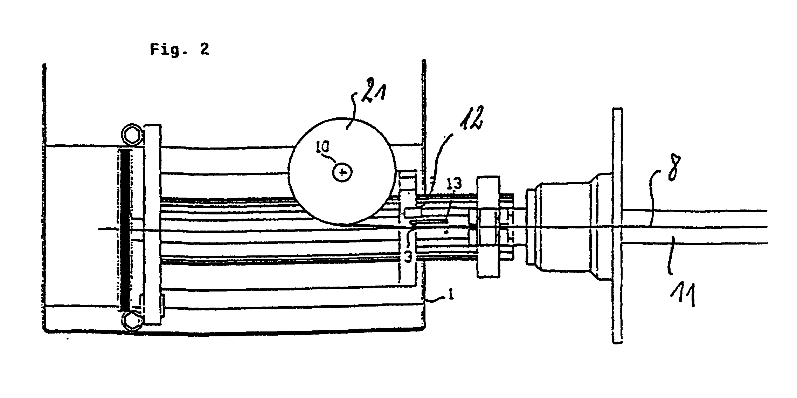

Die Figuren 1 und 2 zeigen schematisch ein Tastelement 4, welches ein Tastkopf und/oder ein Halter für ein Unwuchtausgleichsgewicht sein kann. Das Tastelement 4 kann an bestimmte Stellen eines Kraftfahrzeugrades 7 angelegt werden. Das Kraftfahrzeugrad 7 ist zur Drehung um eine Achse auf eine Meßwelle 11 einer Auswuchtmaschine 1 aufgespannt. Die Achse fällt mit der Radachse 8 des aufgespannten Kraftfahrzeugrades 7 zusammen.

An der in den Figuren 1 und 2 dargestellten Auswuchtmaschine ist z.B. an ihrem Rahmen oder zur Unwuchtmeßanordnung gehörigen schwingungsfähigen Teil (Schwinger) ein ortsfester Bezugspunkt 3 vorgesehen. Von diesen Bezugspunkt 3 erstreckt sich zum Tastelement 4 ein Verbindungsmittel 6 in Form eines bombierten Bandes das auf einer Spule 21 aufgewickelt ist. Das Verbindungsmittel 6 stellt die geradlinige Verbindung zwischen dem Bezugspunkt 3 und dem Tastelement 4 dar.

Der Bezugspunkt 3 kann als Umlenkstelle für das bombierte Band 6 ausgebildet sein. Das bombierte Band 6 wird zu einem Wandler 10 geführt. In Abhängigkeit von der jeweiligen Auszugslänge des bombierten Bandes 6 wird der Wandler 10 eingestellt und erzeugt entsprechende elektrische Signale. Diese elektrischen Signale werden in bekannter Weise einer bekannten (Hofmann news 5, Impressum 09.85 D) Auswerteeinrichtung, in welcher auch die beim Unwuchtmeßlauf ermittelten Fliehkraftmessungen ausgewertet werden, eingelesen und verarbeitet.

Es ist auch möglich, das die jeweilige Länge des bombierten Bandes 6 abtastende Mittel in den Bezugspunkt 3 anzuordnen. Auch der Wandler 10 kann im Bezugspunkt 3 angeordnet sein.

Die jeweiligen am Kraftfahrzeugrad 7 zu erfassenden Positionen bzw. Stellen können in einer die Rad- bzw. Wellenachse 8 enthaltenden Ebene liegen. Diese Ebene kann die 12-Uhr-Ebene sein. Auch der Bezugspunkt 3 kann in dieser Ebene liegen.

Um eine Führung des Tastelementes 4 in einer Ebene z.B. senkrecht über der Meßwelle 11 bzw. der Radachse 8 zu erreichen, ist das Verbindungselement 6 als breites, bombiertes Band, welches aufgrund seiner Form exakt in der Ebene geführt ist, ausgebildet.

Das bombierte Band kann wie bei einem selbstaufrollenden Maßband aus gehärtetem Stahlblech nach dem Austritt hinter dem Bezugspunkt seine beim Härten eingeprägte gewölbte (bombierte) Form annehmen. Durch die gewölbte (bombierte) Form wird in der einen Ebene eine erhöhte Biegefestigkeit des Bandes erreicht.

Um Fehler bei der Bestimmung der Lage (Abstand und Durchmesser der Ausgleichs ebene) des Tastelemerits 4 durch schräge Anlageflächen am Kraftfahrzeugrad 7 bzw. seiner Felgenschüssel klein zu halten, liegt, wie die Detaildarstellung A in der Fig. 1 zeigt, eine Verbindungsstelle 16, an der das bombierte Band 6 am Tastelement 4 befestigt ist, möglichst dicht an der Tastfläche des Tastelements 4. Zur sicheren Handhabung und zum Andrücken von z.B. selbstklebenden Ausgleichsgewichten sind Griffmulden 14, 15 für die Finger des Bedieners links und rechts von der Verbindungsstelle 16 im Tastelement eingebracht.

Da die Erfassung der Lage des Tastelements 4 auf dem Prinzip der Triangulation beruht, wird diese wie in Figuren 1 und 2 dargestellt, durch Erfassen des Auszuges des bombierten Bandes und dessen Austrittswinkel α bestimmt werden. Als Winkelaufnehmer 12 bzw. Wandlerelement für den Winkel α kann z.B. ein Potentiometer mit geringem Drehmoment eingesetzt werden, dessen Achsmittelpunkt im Bezugspunkt 3 liegt. Auf der Potentiometerachse ist ein Hebel 13 befestigt, an dessen anderem Ende eine Gabel oder Öse angebracht ist, durch die das bombierte Band 6 geführt wird, oder der Hebel wird mit geringer Federkraft an das Verbindungselement angedrückt.

Beim dargestellte Ausführungsbeispiel ist das Verbindungselement 6 auf die Spule 21 aufgewickelt, mit welcher der Wandler 10 zum Erfassen der Auszugslänge verbunden ist. Das Ausführungsbeispiel kann jedoch in der Weise abgeändert sein, daß die Spule 21 mit ihrer Achse im Bezugspunkt 3 liegt. Die Spule 21 kann in der Weise mit einem Gehäuse ausgestattet sein, wie das bei einem oben schon erwähnten selbstaufrollenden Maßband aus Stahlblech bekannt ist. Die Spule 21 ist dann mit ihrer Achse etwa senkrecht zur Radachse 8 angeordnet. Die Breite des bombierten Bande 6, welches das Verbindungs-element 6 bildet, erstreckt sich senkrecht zu der Ebene, in welcher der Auszug des Verbindungselementes bzw. bombierten Bandes 6 erfolgt. Zur Messung des Austrittswinkels α kann der in der Fig. 2 gezeigte und um den Bezugspunkt 3 schwenkbare Hebel 13 vorgesehen sein. Es ist jedoch auch möglich, das Gehäuse, in welchem die Spule 21 angeordnet ist, mit dem Winkelaufnehmer 12 zu verbinden, so daß die beim Ausziehen des Bandes 6 erfolgende Schwenkbewegung des Gehäuses vom Winkelaufnehmer 12 gemessen wird. Da das bombierte Band 6 unter Federspannung steht, wird es nach dem Erfassen der jeweiligen Ausgleichsposition am Kraftfahrzeugrad 7 zusammen mit dem Tastelement 4 auf die Spule 21 zurückgezogen, wobei dann das Tastelement 4 in seiner Ruheposition im Halter 17 angeordnet werden kann. Aufgrund der erhöhten Biegesteifigkeit des bombierten Bandes (Verbindungselement 6) in der Ebene, in welcher sein Auszug erfolgt, erreicht man eine definierte Führung des Tastelementes 4 an die jeweiligen abzutastenden Positionen am Kraftfahrzeugrad. Diese liegen bevorzugt, wie die Figuren zeigen, an der Innenseite des Scheibenrades.

Nach dem Ausmessen der Ausgleichsebenen wird das Tastelement 4 auf dem Halter 17 abgelegt. Um eine Beschädigung der Vorrichtung beim Meßlauf zur Unwuchtmessung zu verhindern, wird die Länge des bombierten Bandes 6 mit denen, bei der Justage nichtflüchtig abgespeicherten Werten in Ruhelage verglichen und bei Abweichung ein Meßlauf verhindert.

Hierzu kann der Wandler 10 im Ausführungsbeispiel der Figuren 1 und 2 mit einem Komparator verbunden sein. Der Komparator ist an einen Speicher angeschlossen, der einen Sollwert für die Auszugslänge des bombierten Bandes 6 gespeichert enthält, den das Band 6 in seiner Ruheposition bei der Anordnung des Tastelementes 4 im Halter 17 hat. Wenn die Auszugslänge des bombierten Bandes 6 bei Anordnung des Tastelementes 4 im Halter 17 vom gespeicherten Sollwert abweicht, kann ein Signal (optisch oder akustisch) vorgessehen werden, welches erst der Bedienungsperson anzeigt, daß entweder das Tastelement 4 und/oder das bombierte Band 6 sich nicht in der Ruheposition befinden.

Um das Wiederauffinden der zuvor ausgemessenen Ausgleichsebene an der Felgenschüssel 7 zu erleichtern, kann eine steuerbare Auszugsbegrenzung für das bombierte Band 6 vorgesehen werden, wie es in der OffenlegungsSchrift DE 43 36 508 A1 bereits beschrieben ist.

## Patentansprüche

1. Vorrichtung zum Erfassen einer bestimmten Position an einem Kraftfahrzeugrad, das auf einer Messwelle (11) einer Auswuchtmaschine (1) zum Drehen um seine Radachse (8) aufgespannt ist, mit einem mechanischen Tastelement (4), welches in die jeweilige zu erfassende Position bewegbar ist, und einer über Verbindungsmittel (6) mit dem Tastelement (4) verbundenen Wandlereinrichtung (10, 12), welche in Abhängigkeit von der jeweiligen maschinenbezogenen Position des Tastelementes (4) elektrische Signale erzeugt, wobei an der Maschine (1) in wenigstens einem Bezugspunkt (3) ein Winkelaufnehmer (13) angeordnet ist, welcher den Winkel zwischen einem durch den Bezugspunkt (3) verlaufenden und zur Radachse (8) parallelen Schenkel und einem in seiner Auszugslänge verstellbaren Verbindungselement (6) zwischen dem Bezugspunkt (3) und dem Tastelement (4) erfasst, und wobei ein Wandler (12) ein dem jeweiligen erfassten Winkel entsprechendes elektrisches Winkelsignal und ein Wandler (10) ein der jeweiligen Auszugslänge entsprechendes elektrisches Auszugssignal erzeugen,
**dadurch gekennzeichnet, dass** das Verbindungselement als bombiertes Band (6) ausgebildet ist, das sich in der Breite senkrecht zur Ebene erstreckt, in welcher das Band (6) in seiner Längsrichtung bewegbar ist.

2. Vorrichtung nach Anspruch 1,
**dadurch gekennzeichnet, dass** der wenigstens eine Bezugspunkt (3) in einer zur Rad- bzw. Wellenachse (8) senkrechten Ebene liegt.

3. Vorrichtung nach Anspruch 1 oder 2,
**dadurch gekennzeichnet, dass** der wenigstens eine Bezugspunkt (3) in der Ebene liegt, in welcher die jeweiligen am Kraftfahrzeugrad (7) zu erfassenden Positionen liegen.

4. Vorrichtung nach einem der Ansprüche 1 bis 3,
**dadurch gekennzeichnet, dass** die jeweiligen am Kraftfahrzeugrad (7) durch das Tastelement (4) zu erfassenden Positionen in einer die Rad- bzw. Wellenachse (8) enthaltenden Ebene liegen.

5. Vorrichtung nach einem der Ansprüche 1 bis 4,
**dadurch gekennzeichnet, dass** das Tastelement (4) durch das bombierte Band (6) in einer die Radachse (8) enthaltenden Ebene geführt ist.

6. Vorrichtung nach einem der Ansprüche 1 bis 5,
**dadurch gekennzeichnet, dass** das als Halter für ein Ausgleichsgewicht ausgebildete Tastelement (4) Griffmulden (14, 15) zu beiden Seiten einer Verbindungsstelle (16), an welcher das Tastelement (4) mit dem bombierten Band (6) verbunden ist, aufweist.

7. Vorrichtung nach einem der Ansprüche 1 bis 6,
**dadurch gekennzeichnet, dass** ein Halter (17) für die Ruhelage des Tastelements (4) vorgesehen ist und dass in der Ruhelage des Tastelements (4) die Istauszugslänge des bombierten Bandes (6) in einem Komparator (19) mit der in einem Speicher (18) gespeicherten Sollauszugslänge für die Ruhelage verglichen wird.

8. Vorrichtung nach einem der Ansprüche 1 bis 7,
**dadurch gekennzeichnet, dass** das als bombiertes Band ausgebildete Verbindungselement (6) auf eine Spule (21). gewickelt ist, deren Achse senkrecht zur Radachse (8) liegt.

9. Vorrichtung nach Anspruch 8,
**dadurch gekennzeichnet, dass** die Achse der Spule (21), auf welcher das bombierte Band (6) aufgewickelt ist, senkrecht zu der Ebene verläuft, in welcher das Band (6) in seiner Längsrichtung bewegbar ist.

10. Vorrichtung nach Anspruch 8 oder 9,
**dadurch gekennzeichnet, dass** die Achse der Spule (21), auf welcher das bombierte Band (6) aufgewickelt ist, im Bezugspunkt (3) liegt.

## Claims

1. A device for detecting a given position on a motor vehicle wheel which is clamped on a measuring shaft (11) of a balancing machine (1) for rotation about its wheel axis (8), comprising a mechanical sensing element (4) which is movable into the respective position to be detected, and a transducer device (10, 12) which is connected to the sensing element (4) by way of connecting means (6) and which produces electrical signals in dependence on the respective machine-related position of the sensing element (4), wherein arranged on the machine (1) in at least one reference point (3) is an angle pick-up (13) which detects the angle between a leg which passes through the reference point (3) and which is parallel to the wheel axis (8) and a connecting element (6) which is adjustable in respect of its extension length between the reference point (3) and the sensing element (4), and wherein a transducer (12) produces an electrical angle signal corresponding to the respective detected angle and a transducer (10) produces an electrical extension signal corresponding to the respective extension length, **characterised in that** the connecting element is in the form of a cambered band (6) which extends in respect of width perpendicularly to the plane in which the band (6) is movable in its longitudinal direction.

2. A device according to claim 1 **characterised in that** the at least one reference point (3) is in a plane perpendicular to the wheel or shaft axis (8).

3. A device according to claim 1 or claim 2 **characterised in that** the at least one reference point (3) is in the plane in which the respective positions to be detected on the motor vehicle wheel (7) are disposed.

4. A device according to one of claims 1 to 3 **characterised in that** the respective positions to be detected on the motor vehicle wheel (7) by the sensing element (4) are in a plane which includes the wheel or shaft axis (8).

5. A device according to one of claims 1 to 4 **characterised in that** the sensing element (4) is guided by the cambered band (6) in a plane which includes the wheel axis (8).

6. A device according to one of claims 1 to 5 **characterised in that** the sensing element (4) which is in the form of a holder for a balancing weight has gripping depressions (14, 15) at both sides of a connecting location (16) at which the sensing element (4) is connected to the cambered band (6).

7. A device according to one of claims 1 to 6 **characterised in that** there is provided a holder (17) for the rest position of the sensing element (4) and that in the rest position of the sensing element (4) the actual extension length of the cambered band (6) is compared in a comparator (19) to the reference extension length for the rest position, said reference extension length being stored in a memory (18).

8. A device according to one of claims 1 to 7 **characterised in that** the connecting element (6) in the form of the cambered band is wound onto a reel (21) whose axis is perpendicular to the wheel axis (8).

9. A device according to claim 8 **characterised in that** the axis of the reel (21) onto which the cambered band (6) is wound extends perpendicularly to the plane in which the band (6) is movable in its longitudinal direction.

10. A device according to claim 8 or claim 9 **characterised in that** the axis of the reel (21) on which the cambered band (6) is wound is at the reference point (3).

## Revendications

1. Dispositif de détection d'une position déterminée sur une roue de véhicule automobile qui est serrée sur un arbre de mesure (11) d'une machine d'équilibrage (1) pour faire tourner ladite roue autour de son axe (8), le dispositif comportant un élément palpeur mécanique (4), qui est mobile pour venir dans la position respective à déterminer, et un dispositif convertisseur (10, 12), qui est relié à l'élément palpeur (4) par un moyen de liaison (6), qui génère des signaux électriques en fonction de la position respective de l'élément palpeur (4) par rapport à la machine ; un capteur d'angle (13) est monté sur la machine (1) en au moins un point de référence (3), lequel capteur détecte l'angle formé par une branche passant par le point de référence (3) et parallèle à l'axe de roue (8) et un élément de liaison (6) dont la longueur d'extension est réglable entre le point de référence (3) et l'élément palpeur (4), et un convertisseur (12) génère un signal d'angle électrique correspondant à l'angle respectif détecté et un convertisseur (10) génère un signal d'extension électrique correspondant à la longueur d'extension respective ;
**caractérisé en ce que** l'élément de liaison est conformé en ruban bombé (6) qui s'étend dans la largeur perpendiculairement au plan dans lequel le ruban (6) est mobile dans la direction de sa longueur.

2. Dispositif selon la revendication 1, **caractérisé en ce que** l'au moins un point de référence (3) est situé dans un plan perpendiculaire à l'axe (8) de la roue ou de l'arbre.

3. Dispositif selon la revendication 1 ou 2, **caractérisé en ce que** l'au moins un point de référence (3) se trouve dans le plan dans lequel se trouvent les positions respectives à détecter sur la roue (7) de véhicule automobile.

4. Dispositif selon l'une des revendications 1 à 3, **caractérisé en ce que** les positions respectives à détecter sur la roue (7) de véhicule automobile par l'élément palpeur (4) se trouvent dans un plan passant par l'axe (8) de la roue ou de l'arbre.

5. Dispositif selon l'une des revendications 1 à 4, **caractérisé en ce que** l'élément palpeur (4) est guidé par le ruban bombé (6) dans un plan passant par l'axe (8) de la roue.

6. Dispositif selon l'une de revendications 1 à 5, **caractérisé en ce que** l'élément palpeur (4), conformé en support d'un contrepoids d'équilibre, comporte des trous de préhension (14, 15) de chaque côté d'un emplacement de raccordement (16) au niveau duquel l'élément palpeur (4) est relié au ruban bombé (6).

7. Dispositif selon l'une des revendications 1 à 6, **caractérisé en ce qu'**il est prévu un support (17) destiné à l'élément palpeur (4) lorsqu'il est dans la position de repos, et **en ce que**, lorsque l'élément palpeur (4) est dans la position de repos, la longueur d'extension réelle du ruban bombé (6) est comparée dans un comparateur (19) à la longueur d'extension théorique dans la position de repos, mémorisée dans une mémoire (18).

8. Dispositif selon l'une des revendications 1 à 7, **caractérisé en ce que** l'élément de liaison (6) conformé en ruban bombé est enroulé sur une bobine (21) dont l'axe est perpendiculaire à l'axe (8) de la roue.

9. Dispositif selon la revendication 8, **caractérisé en ce que** l'axe de la bobine (21), sur laquelle le ruban bombé est enroulé, s'étend perpendiculairement au plan dans lequel le ruban (6) est mobile la direction de sa longueur.

10. Dispositif selon la revendication 8 ou 9, **caractérisé en ce que** l'axe de la bobine (21) sur laquelle le ruban bombé (6) est enroulé se trouve au point de référence (3).
